# EUROPÄISCHE PATENTANMELDUNG

(11) **EP 4 606 456 A1**
(43) Veröffentlichungstag der Anmeldung: **27.08.2025**
(21) Anmeldenummer: 25155714.6
(22) Anmeldetag: 04.02.2025
(51) Int. Cl.: B01D 53/04, B01D 53/06, B01D 53/26, B01D 53/28

(54) **KOMBINATION ROTIERBARE VORTROCKNUNGSEINHEIT MIT CO2-GEWINNUNG**

(30) Priorität: 09.02.2024 DE 102024103685
(71) Anmelder: VOLKSWAGEN AG, 38440 Wolfsburg (DE)
(72) Erfinder: Kawelke, Peter, 38442 Wolfsburg, DE (DE); Hofer, Martin, 38118 Braunschweig (DE); Heimermann, Christian, 38442 Wolfsburg,DE (DE); Wiegel, Marcel, 39649 Gardelegen (DE); Schütz, Christine, 38533 Vordorf (OT Rethen), DE (DE); Beger, Frank, 30163 Hannover, DE (DE); Rüggeberg, Marc, 38124 Braunschweig, DE (DE)
(74) Vertreter: MFG Patentanwälte Meyer-Wildhagen Meggle-Freund Gerhard PartG mbB

(57) **Zusammenfassung**

Vorliegend wird eine Vorrichtung zur Gewinnung von Kohlendioxid aus einem gasförmigen Medium umfassend:
einen ersten Luftströmungskanal für das gasförmige Medium,
einen zweiten Luftströmungskanal für Abluft der Vorrichtung,
mindestens eine rotierbare Vortrocknungseinheit umfassend mindestens ein Sorptionsmittel zur Physisorption von Wasser,
wobei die mindestens eine rotierbare Vortrocknungseinheit axial rotierend antreibbar ist und der erste Luftströmungskanal radial die mindestens eine rotierbare Vortrocknungseinheit ansteuert, beschrieben. Ferner werden ein Verfahren zur Gewinnung von Kohlendioxid, sowie die Verwendung der Vorrichtung und des Verfahrens offenbart.

## Beschreibung

Die Erfindung betrifft eine Vorrichtung zur Gewinnung von Kohlendioxid aus einem gasförmigen Medium, ein Verfahren zur Gewinnung von Kohlendioxid aus einem gasförmigen Medium, sowie die Verwendung der Vorrichtung und des Verfahrens zur Gewinnung von Kohlendioxid.

Die Emission von Kohlendioxid in die Atmosphäre gilt aktuell als wesentlicher Treiber des Klimawandels. Kohlenstoffabscheidungs- und Speichertechniken (Carbon capture and storage - CCS) sind effiziente und effektive Methoden zur Reduzierung der Kohlendioxidemissionen in die Atmosphäre.

Bekannte Verfahren zum Einfangen von Kohlendioxid sind Absorption, Adsorption, Membranbasierte Systeme, elektrochemische Separation und kryogene Trennung.

Eine technische Anwendung des Einfangens von Kohlendioxid ist das Direct Air Capture Verfahren (DAC). Dabei wird Kohlendioxid aus der Umgebungsluft durch einen Abscheideapparat entzogen. Dadurch kann reines Kohlendioxid gewonnen werden, das wiederum in weiteren Prozessen verwendet werden kann.

In der WO2016/005226A1, WO2015/185434A1 und WO2014/170184A1 werden beispielhafte Verfahren zur Gewinnung von Kohlendioxid mit einem Chemisorbenten nach einem Temperatur-Vakuum-Wechselprozess beschrieben. Amin-basierte Chemisorbenten neigen häufig zu Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie beispielsweise eine inerte Atmosphäre im System durch den Einsatz von Wasserdampf oder anderen Gasen. Diese Schutzmaßnahmen sind aufwendig und teuer. Während der Desorption wird Dampf eingeleitet, sodass der Restsauerstoff verdrängt wird und damit eine Schädigung des Materials durch Degradation verhindert werden soll. Bevor das System nach Beendigung der Desorptionsphase wieder in die Adsorptionsphase geht (also in die Aufnahme von CO2), indem das Sorbentmaterial mit Luft in Kontakt gebracht wird, wird dieses auf ca. 50 °C heruntergekühlt. Dies bedeutet einen zusätzlichen Prozessschritt, welcher die zeitliche und energetische Effizienz des Systems reduzieren kann.

Physisorbenten haben i.d.R. eine größere Affinität zu Wasser als zu CO2. Aus diesem Grund ist bei solchen Systemen eine Vortrocknungseinrichtung zur Trocknung der Luft zu finden. Diese Vortrocknung ist baulich und energetisch aufwendig.

In der WO2022/109746A1 wird ein Verfahren zur Gewinnung von Kohlendioxid unter Verwendung von Physisorbenten im Einsatzgebiet von polaren (kalten, trockenen) Regionen beschrieben, da diese Materialien vorzugsweise Wasser aus der Umgebungslauft aufnehmen.

Bei der Verwendung von Physisorbenten gibt es den Ansatz, das Einsatzgebiet eines solchen Systems auf polare Regionen der Erde zu begrenzen, weil dort aufgrund der geringen Temperaturen die Luft im Vergleich zu gemäßigten, subtropischen oder tropischen Klimazonen weniger Wasser enthält. Auf eine technische Vortrocknung kann dennoch nicht ganz verzichtet werden, weil nicht sichergestellt ist, dass im Jahresverlauf durchgängig eine Taupunkttemperatur von beispielsweise -40 oder -60 °C vorliegt. Weiterhin ist der Aufwand der Installation und des Betriebs einer Anlage in polaren Regionen enorm im Vergleich zu erschlossenen Regionen der Erde.

Knox et al., Investigation of Desiccants and CO2 Sorbents for Exploration Systems 2016-2017, ICES-2017-188 offenbaren den Einsatz von Physisorbenten zur Abtrennung von CO₂ aus der Kabinenlauft von Raumschiffen und Raumstationen. Hier findet man einen sogenannten Four Bed Molecular Sieve Ansatz, der eine Verschaltung von Modulen zur Vortrocknung der Kabinenluft und zur CO₂-Abtrennung vorsieht.

EP1142623A2 offenbart einen Temperatur-Vakuum-Wechselprozess zur Isolation von Kohlendioxid aus einem feuchten heißen Gasgemisch.

US2010251887A1 beschreibt ein Verfahren zur Isolation von Kohlendioxid aus einem Gasgemisch umfassend eine Temperaturwechsel-Adsorptions-Schritt.

WO2014/012966A1 offenbart eine Vorrichtung für eine Adsorption-Desorption-Wechselreaktion.

Aufgabe der vorliegenden Erfindung ist es, eine Vorrichtung zur Gewinnung von Kohlendioxid aus einem gasförmigen Medium, sowie ein Verfahren zur Gewinnung von Kohlendioxid aus einem gasförmigen Medium bereitzustellen, die bzw. das die oben genannten Nachteile wenigstens teilweise überwindet.

Diese Aufgabe wird durch die erfindungsgemäße Vorrichtung nach Anspruch 1, das Verfahren nach Anspruch 8 und die Verwendung nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Eine erfindungsgemäße Vorrichtung zur Gewinnung von Kohlendioxid aus einem gasförmigen Medium umfasst:
- einen ersten Luftströmungskanal für das gasförmige Medium,
- einen zweiten Luftströmungskanal für Abluft der Vorrichtung,
- mindestens eine rotierbare Vortrocknungseinheit umfassend mindestens ein Sorptionsmittel zur Physisorption von Wasser,
wobei die mindestens eine rotierbare Vortrocknungseinheit axial rotierend antreibbar ist und der erste Luftströmungskanal radial die mindestens eine rotierbare Vortrocknungseinheit ansteuert.

Bei dem gasförmigen Medium kann es sich um Atmosphäre, Umgebungsluft, Abgase, z. B. aus Industrieanlagen, Gasmischungen, Punktquellen, etc. handeln. Das gasförmige Medium umfasst unter anderem Kohlendioxid (CO₂). In einer bevorzugten Ausführungsform handelt es sich bei dem gasförmigen Medium um Umgebungsluft, hierin auch als Luft bezeichnet.

Die erfindungsgemäße Vorrichtung weist einen ersten Luftströmungskanal für das gasförmige Medium auf. Bei dem zugeführten gasförmigen Medium in dem ersten Luftströmungskanal kann es sich um Prozessluft handeln.

Die erfindungsgemäße Vorrichtung weist zudem einen zweiten Luftströmungskanal für Abluft der Vorrichtung auf. Bei der Abluft handelt es sich vorzugweise um ein feuchtes gasförmiges Medium dem Kohlendioxid entzogen wurde.

Ferner weist eine erfindungsgemäße Vorrichtung mindestens eine rotierbare Vortrocknungseinheit umfassend mindestens ein Sorptionsmittel zur Physisorption von Wasser auf, wobei die mindestens eine rotierbare Vortrocknungseinheit axial rotierend antreibbar ist und der erste Luftströmungskanal radial die mindestens eine rotierbare Vortrocknungseinheit ansteuert.

Rotierbar im Sinne der vorliegenden Erfindung bedeutet, dass die Vortrocknungseinheit so verbaut ist, dass sie sich um ihre eigene Achse drehen kann und vorzugsweise während des Betriebs um ihre eigene Achse rotiert.

Bei der rotierbaren Vortrocknungseinheit handelt es sich vorzugsweise um ein Sorptionsrad bzw. einen Sorptionswärmetauscher. Ein Sorptionsrad ist ein radförmiges Bauteil, das an der Außenseite mit einem Sorptionsmittel beschichtet ist. Das Sorptionsrad bzw. der Sorptionswärmetauscher kann rotieren und von einem gasförmigen Medium angeströmt werden, aus dem mittels des Sorptionsmittels auf der rotierbaren Vortrocknungseinheit ein bestimmter Stoff sorbiert werden kann.

Eine erfindungsgemäße Vorrichtung kann eine rotierbare Vortrocknungseinheit umfassen.

Alternativ kann eine erfindungsgemäße Vorrichtung mindestens zwei rotierbare Vortrocknungseinheiten umfassen. Sind mindestens zwei rotierbare Vortrocknungseinheiten vorhanden, so können diese parallel und/oder in Reihe angeordnet sein.

Die mindestens eine rotierbare Vortrocknungseinheit ist axial rotierend antreibbar, d.h. sie rotiert um ihre eigene Achse. Der erste Luftströmungskanal steuert die mindestens eine rotierbare Vortrocknungseinheit radial an. Die Durchströmungsrichtung des gasförmigen Mediums verläuft somit radial.

Das Sorptionsmittel zur Physisorption von Wasser ist vorzugsweise an der Umfangsfläche der rotierbaren Vortrocknungseinheit angeordnet, sodass der erste Luftströmungskanal direkt das Sorptionsmittel ansteuert und das gasförmige Medium, das durch den ersten Luftströmungskanal fließt, direkt mit dem Sorptionsmittel in Kontakt kommt.

Durch die Rotation der rotierbaren Vortrocknungseinheit kommt ein Teil der rotierbaren Vortrocknungseinheit in Kontakt mit dem gasförmigen Medium und das Sorptionsmittel an dem Teil der rotierbaren Vortrocknungseinheit kann die Feuchtigkeit, d.h. das Wasser in dem gasförmigen Medium zumindest teilweise aufnehmen. Durch die Rotation bewegt sich die rotierbare Vortrocknungseinheit weiter und der mit Feuchtigkeit benetzte Teil des Sorptionsmittels kann sich zu einem Bereich, der Regenerationsseite, weiter bewegen, in dem das Sorptionsmittel getrocknet werden kann. Das Sorptionsmittel kann durch Zuführen von sogenannter Regenerationsluft getrocknet werden. Durch die Weiterrotation kann das getrocknete Sorptionsmittel wieder eingesetzt werden, um gasförmiges Medium zu trocknen. Aus der rotierbaren Vortrocknungseinheit kann so vorgetrocknetes gasförmiges Medium austreten.

Die Durchströmungsrichtung der Prozess- und Regenerationsluft verläuft insbesondere radial.

Bei dem Teil der rotierbaren Vortrocknungseinheit, der in Kontakt mit dem gasförmigen Medium kommt, kann es sich um bis zu 50% der Umfangsfläche der rotierbaren Vortrocknungseinheit handeln, vorzugsweise um bis zu 30% der Umfangsfläche der rotierbaren Vortrocknungseinheit, weiter bevorzugt um bis zu 25% der Umfangsfläche der rotierbaren Vortrocknungseinheit handeln.

Diese Anordnung der Durchströmungsrichtung ist vorteilhaft, weil im äußeren radialen Bereich der Umfangsfläche auf der Trocknungsseite ein höherer Wasserpartialdruck vorliegt und damit bei niedrigerer Strömungsgeschwindigkeit die Adsorption der Feuchtigkeit, d.h. des Wassers des gasförmigen Mediums gut funktioniert. Bei kleiner werdendem Radius sinkt der Wasserpartialdruck durch die fortschreitende Wasseradsorption. Gleichzeitig wird die Strömungsgeschwindigkeit erhöht, so dass die Kinetik der Adsorption unterstützt wird und damit auch bei kleineren Wasserpartialdrücken eine gute Trocknungswirkung erzielt werden kann.

Eine erfindungsgemäße Vorrichtung kann mindestens eine Vorkonditioniereinheit aufweisen. Eine Vorkonditioniereinheit ist ein Bauteil mittels dessen das gasförmige Medium in geeigneter Form dem/den weiteren Bauteil/en, wie der mindestens einen rotierbaren Vortrocknungseinheit zugeführt werden kann. Eine Vorkonditioniereinheit kann beispielweise das gasförmige Medium auf eine definierte Temperatur kühlen, oder erhitzen. Eine Vorkonditioniereinheit kann das gasförmige Medium mittels Druck zusätzlich, oder alternativ zum Einstellen der Temperatur komprimieren, oder expandieren.

Durch den Einsatz einer Vorkonditioniereinheit kann eine erfindungsgemäße Vorrichtung auch für unterschiedliche klimatische Bedingungen (z. B. höhere H₂O-Gehalte in der Umgebungsluft bei höherer Temperatur- und/ oder Luftfeuchtigkeit) eingesetzt werden.

In einer Ausführungsform umfasst eine erfindungsgemäße Vorrichtung mindestens eine Trocknungseinheit und mindestens eine CO₂-Einheit.

In der Trocknungseinheit kann das vorgetrocknete gasförmige Medium auf einen bestimmten Feuchtigkeitsgehalt getrocknet werden. Die Trocknungseinheit weist vorzugsweise mindestens ein geeignetes Material auf, mittels dem bzw. denen der Feuchtigkeitsgehalt eingestellt werden kann. Das Material kann homogen in der Trocknungseinheit verteilt sein. Alternativ kann das Material auch schichtweise in der Trocknungseinheit verteilt sein. Insbesondere beim schichtweisen Aufbau der Trocknungseinheit kann die Trocknungseinheit einen Trocknungsgradienten aufweisen. Es kann also eine erste Schicht zu einer ersten Trocknung bis zu einem bestimmten Feuchtigkeitsgehalt führen. In der weiteren Schicht der Trocknungseinheit kann eine weitere Trocknung bis zu einem bestimmten Feuchtigkeitsgehalt stattfinden. Eine Trocknungseinheit kann beliebig viele Schichten aufweisen. Idealerweise sind die Schichten aufeinander abgestimmt.

Die Trocknungseinheit adsorbiert vorzugsweise 99,0 % (entspricht Taupunkt -40 °C nach Trocknungseinheit), weiter bevorzugt 99,7 % (Taupunkt -50 °C), noch weiter bevorzugt 99,9 % (Taupunkt -60 °C) der im gasförmigen Medium vorhandenen Menge H₂O.

Die Trocknungseinheit kann mindestens vier Module aufweisen, wobei mindestens ein Modul der Trocknungseinheit ein Desorptionsmodul ist, mindestens zwei Module der Trocknungseinheit Wärmeverschiebungsmodule sind und mindestens ein Modul der Trocknungseinheit ein Adsorptionsmodul ist. Jedes Modul der Trocknungseinheit kann separat mit dem geeigneten Material zur Trocknung aufgebaut sein. Vorzugsweise sind alle Module der Trocknungseinheit identisch mit dem bzw. den geeigneten Material bzw. Materialien aufgebaut.

Bei der Anzahl der Module in der Trocknungseinheit kann es sich um ein Vielfaches der genannten Anzahl der einzelnen Module handeln.

Unter einem Desorptionsmodul versteht man eine Baueinheit, die einen Stoff desorbieren und vorzugsweise auch adsorbieren kann. Bei dem Stoff kann es sich um H₂O handeln. Das Desorptionsmodul kann nach dem Desorbieren des Stoffes beispielsweise als Adsorptionsmodul und/oder als Wärmeverschiebungsmodul eingesetzt werden.

Unter einem Adsorptionsmodul versteht man eine Baueinheit, die einen Stoff adsorbieren und vorzugsweise auch desorbieren kann. Bei dem Stoff kann es sich um H₂O handeln. Das Adsorptionsmodul kann nach dem Adsorbieren des Stoffes beispielsweise als Desorptionsmodul und/oder als Wärmeverschiebungsmodul eingesetzt werden.

Unter einem Wärmeverschiebungsmodul versteht man eine Baueinheit, die Wärme abführen bzw. aufnehmen kann. Je nachdem in welcher Phase des Verfahrens sich das Wärmeverschiebungsmodul befindet, kann das Modul Wärme abführen oder Wärme aufnehmen. In der Wärmeverschubphase vor der Desorptionsphase kann das Modul Wärme aufnehmen (von einem anderem Modul, welches sich in der Wärmeverschubphase befindet und Wärme abgibt). Beispielsweise kann ein Wärmeverschiebungsmodul ein ehemaliges Adsorptionsmodul sein. Durch die Adsorption eines Stoffes in einem Adsorptionsmodul kann es gleichzeitig zu einer Anreicherung von Wärme, d.h. einem Anstieg der Temperatur in dem Adsorptionsmodul kommen. Die Wärme wird vorzugsweise abgeführt, um idealerweise an einem anderen Modul eingesetzt zu werden, indem beispielsweise mittels der zugeführten Wärme ein adsorbierter Stoff desorbiert werden kann. Die Wärmeübertragung kann beispielsweise durch durchströmende Luft erfolgen.

Die Trocknungseinheit kann mindestens vier Module aufweisen. Die Trocknungseinheit kann in alternativen Ausführungsformen auch mehr als vier Module aufweisen. Die Anzahl der Module richtet sich vorzugsweise danach, dass ein konstanter Massenstrom durch die Vorrichtung vorherrscht.

Die Anzahl der Wärmeverschiebungsmodule der Trocknungseinheit können der Summe der Desorptionsmodule der Trocknungseinheit und der Adsorptionsmodule der Trocknungseinheit entsprechen. Beispielsweise kann die Anzahl der Module wie folgt ausgedrückt werden: Anzahl der Trocknungsmodule = x Desorptionsmodule + y Adsorptionsmodule + z Wärmeverschiebungsmodule, wobei z=2, oder ein ganzzahliges Vielfaches von 2.

Es können zwei Trocknungsmodule in der Wärmeverschiebung sein, wobei ein Modul Wärme sendet und ein Modul Wärme empfängt.

Die Trocknungseinheit kann unabhängig von der CO₂-Einheit ausgebildet sein.

Eine erfindungsgemäße Vorrichtung kann ferner mindestens eine CO₂-Einheit aufweisen. Eine CO₂-Einheit kann eine bestimmte Menge Kohlendioxid adsorbieren. Dabei weist die CO₂-Einheit vorzugsweise mindestens ein Material auf, das Kohlendioxid adsorbieren kann.

Die CO₂-Einheit adsorbiert vorzugsweise 80 %, weiter bevorzugt 90 %, noch weiter bevorzugt 99 % der im gasförmigen Medium vorhandenen Menge Kohlendioxid.

Die CO₂-Einheit kann mindestens ein Adsorptionsmodul und mindestens ein Desorptionsmodul umfassen. Die CO₂-Einheit kann auch ein Modul aufweisen, das wechselweise als Adsorptionsmodul und als Desorptionsmodul dienen kann. Vorzugsweise kann die CO₂-Einheit je nach Verfahrensstand CO₂ adsorbieren oder CO₂ desorbieren und entsprechend ausgebildet sein.

Die CO₂-Einheit kann ferner mindestens ein Wärmeverschiebungsmodul aufweisen.

Vorzugsweise kann das Modul der CO₂-Einheit je nach Verfahrensstand CO₂ adsorbieren oder CO₂ desorbieren und Wärme verschieben und somit entsprechend ausgebildet sein.

In der Vorrichtung sind eine bestimmte Anzahl an Modulen in der Trocknungseinheit und Modulen in der CO₂-Einheit vorhanden, welche unabhängig voneinander in den Hauptbetriebsphasen "Adsorption" und "Desorption" betrieben werden können. Damit können die Trocknungseinheit und die CO₂-Einheit individuell optimiert betrieben werden. Dieses System wird als "entkoppeltes System" bezeichnet. Der Luftmassenstrom durch die Vorrichtung ist vorzugsweise konstant, so dass genau so viele Module in der Trocknungseinheit in der Adsorptionsphase betrieben werden, wie für die CO₂-Adsorption in den Modulen der CO₂-Einheit erforderlich sind, um die erforderliche Taupunkt-Temperaturbedingung am Eintritt der CO₂-Einheit darzustellen.

In einer Ausführungsform steuert der zweite Luftströmungskanal radial die rotierbare Vortrocknungseinheit an. In einer derartigen Ausführungsform verlaufen der erste Luftströmungskanal und der zweite Luftströmungskanal parallel. Die Abluft, die der rotierbaren Vortrocknungseinheit durch den zweiten Luftströmungskanal zugeführt wird, kann so Feuchtigkeit, d.h. Wasser aufnehmen und das Sorptionsmittel trocknen.

Die rotierbare Vortrocknungseinheit kann eine Art von Sorptionsmittel zur Physisorption von Wasser aufweisen.

In einer Ausführungsform kann die rotierbare Vortrocknungseinheit mindestens zwei Arten Sorptionsmittel zur Physisorption von Wasser umfassen.

Das mindestens eine Sorptionsmittel zur Physisorption von Wasser kann ausgewählt sein aus der Gruppe bestehend aus Zeolith, Graphit, Alumosilikat, MOF (Metal Organic Framework) oder ein Silicagel.

Vorzugsweise handelt es sich bei dem mindestens einen Sorptionsmittel um ein Silicagel. Alternativ handelt es sich bei dem mindestens einen Sorptionsmittel um Zeolith.

Liegen mindestens zwei Sorptionsmittel vor, so kann es sich um eine Kombination aus einem Silicagel und Zeolith handeln. Die Kombination von Sorptionsmitteln kann schichtweise angeordnet sein. Vorzugsweise kann durch ein Sorptionsmittel eine Grobtrocknung des gasförmigen Mediums und durch das zweite Sorptionsmittel eine Feintrocknung des gasförmigen Mediums stattfinden.

Auch bei der Anordnung der radialen Luftführung kann ein bestimmtes Beschichtungsmuster anwendbar sein. Im äußeren radialen Bereich ist ein Sorptionsmittel zur groben Trocknung vorteilhaft (z.B. Silicagel), im inneren radialen Bereich ist ein Sorptionsmittel zur feinen Trocknung vorteilhaft (z.B. Zeolith).

Eine Kombination aus mindestens zwei Sorptionsmitteln, d.h. mindestens zwei Beschichtungen der rotierbaren Vortrocknungseinheit ist vorteilhaft, da es das gasförmige Medium auf einen noch niedrigeren Taupunkt trocknen kann im Vergleich zu einer rotierbaren Vortrocknungseinheit mit nur einer Art von Beschichtung an Sorptionsmittel. Die Aufteilung zwischen der ersten und der zweiten Beschichtung erfolgt vorzugsweise im Verhältnis 70% / 30% bis 90% / 10%, weiter bevorzugt im Bereich von 75% / 25% bis 80% / 20%.

Eine erfindungsgemäße Vorrichtung kann ferner mindestens einen Zwischenkühler umfassen.

Vorzugsweise ist ein Zwischenkühler nach der Trocknungseinheit angeordnet. Ein Zwischenkühler kann auch vor der CO₂-Einheit angeordnet sein. In einer möglichen Variante ist ein Zwischenkühler zwischen der Trocknungseinheit und der CO₂-Einheit angeordnet.

Ein Zwischenkühler kühlt das eintretende (gasförmige) Medium vorzugsweise auf eine definierte Temperatur herunter. Die Temperatur ist vorzugsweise <15°C, weiter bevorzugt <10°C, noch weiter bevorzugt <6°C. Insbesondere bevorzugt wird das eintretende (gasförmige) Medium auf eine Temperatur von 5°C gekühlt.

Mit zusätzlichen und/oder größeren Klimageräten könnte nach der Trocknungseinheit noch tiefer heruntergekühlt (z. B. auf -20 bis -40 °C) werden.

Eine erfindungsgemäße Vorrichtung kann mindestens eine Wärmetauschereinheit aufweisen. Die Wärmetauschereinheit kann insbesondere zur Wärmerückgewinnung dienen. Durch den Einsatz einer Wärmetauschereinheit kann der durch externe Energiequellen zugeführte Energiebedarf gesenkt werden und so die Energieeffizienz der Vorrichtung erhöht werden.

Die durch die Wärmetauschereinheit rückgewonnene Wärme kann beispielsweise für die Desorption von H₂O aus der Trocknungseinheit und/oder Kohlendioxid aus der CO₂-Einheit verwendet werden.

Der Energiebedarf der erfindungsgemäßen Vorrichtung kann weiter durch den Einsatz von mindestens einer Wärmepumpe gesenkt werden. Durch die Wärmepumpe kann die Energie für die Desorption in der Trocknungseinheit und/oder der CO₂-Einheit gewonnen werden. Die kalte Abluft der Wärmepumpe kann zur Kühlung z. B. in der rotierbaren Vortrocknungseinheit und/oder dem Zwischenkühler zur Kühlung eingesetzt werden.

Eine erfindungsgemäße Vorrichtung kann ferner mindestens eine Gebläsevorrichtung aufweisen. Das Gebläse kann dazu dienen das gasförmige Medium durch die Vorrichtung zu führen. Das Gebläse kann an der Eingangsseite und/oder der Ausgangsseite der Vorrichtung angeordnet sein. Ist das Gebläse an der Eingangsseite angeordnet, wird das gasförmige Medium in die Vorrichtung (beispielsweise in die rotierende Trocknungseinheit) gedrückt. Ist das Gebläse an der Ausgangsseite der Vorrichtung angeordnet, so wird durch den Sog, der durch das Gebläse entsteht, das gasförmige Medium durch die Vorrichtung gesogen.

Es können mehrere Gebläsevorrichtungen vorhanden sein oder nur eine Gebläsevorrichtung.

Für einen möglichst einfachen Aufbau kann versucht werden, auf mehrere Gebläse zu verzichten und die Luftstromaufteilung mittels variabler Drosseln einzustellen, solange der dafür zusätzlich entstehende Druckverlust vertretbar ist.

Die mindestens eine Trocknungseinheit und/oder die mindestens eine CO₂-Einheit können ebenfalls mindestens einen Physisorbenten bzw. mindestens ein Sorptionsmittel umfassen. Ein Physisorbent ist eine Verbindung, die durch physikalische Kräfte einen Stoff (z. B. ein Gas wie Kohlendioxid) an sich binden kann. Ein Physisorbent desorbiert idealerweise den adsorbierten Stoff unter kontrollierten Bedingungen. Dies kann beispielsweise durch Einwirken von Wärme, Druck, Anlagern von anderen Stoffen unter Abgabe des zuerst adsorbierten Stoffs, etc. geschehen.

Die verwendeten Physisorbenten sind vorzugsweise robust, alterungsbeständig und kommerziell in großem Maßstab verfügbar. Im Vergleich zu Chemisorbenten gibt es in der Regel keine Alterungs- oder Degradationserscheinungen im eingesetzten Temperaturbereich.

Bei dem Physisorbenten kann es sich um einen homogenen Stoff oder um eine Mischung handeln. Vorzugsweise handelt es sich bei dem mindestens einen Physisorbenten um einen Feststoff. Der mindestens eine Physisorbent kann ausgewählt sein aus der Gruppe bestehend aus Silicagel, Zeolith, Alumosilikat und MOF (Metal Organic Framework).

Vorzugsweise weist die Trocknungseinheit einen schichtweisen Aufbau von Physisorbenten auf. In einer Ausführungsform weist die Trocknungseinheit mindestens eine Schicht Silicagel und mindestens eine Schicht Zeolith auf. Die mindestens eine Schicht Silicagel ist vorzugsweise im Einlassbereich der Trocknungseinheit angeordnet, sodass das Silicagel eine erste Trocknung durchführen kann. Das so getrocknete Medium wird anschließend durch die mindestens eine Zeolithschicht geführt, sodass eine weitere Trocknung des Mediums stattfinden kann.

Alternativ umfasst die Trocknungseinheit mindestens eine Schicht Silicagel und mindestens zwei Schichten Zeolith. Im Einlassbereich der Trocknungseinheit kann eine Schicht aus Zeolith angeordnet werden, eine sogenannte Schutzschicht. Die Schutzschicht kann dazu dienen Verunreinigungen aus dem gasförmigen Medium zu entfernen, um so die folgenden Schichten zu schützen. An die Schutzschicht kann mindestens eine Schicht Silicagel angeordnet sein, sodass das Silicagel eine erste Trocknung durchführen kann. Das so zum Teil getrocknete Medium wird anschließend durch die mindestens eine Zeolithschicht geführt, sodass eine weitere Trocknung des zum Teil getrockneten Mediums stattfinden kann.

Das Verhältnis der ersten Schicht (z. B. Silicagel) und der zweiten Schicht (z. B. Zeolith) kann im Bereich zwischen 1,5 und 3,5, vorzugsweise im Bereich zwischen 2,0 und 3,0, weiter bevorzugt im Bereich zwischen 2,3 und 2,5 sein.

Idealerweise ist das Sorptionsmittel bzw. sind die Sorptionsmittel der rotierbaren Vortrocknungseinheit auf den bzw. die Physisorbenten der Trocknungseinheit abgestimmt. Eine erfindungsgemäße Vorrichtung kann bei einem CO₂-Partialdruck im Bereich von ca. 380 bis 480 ppm, vorzugsweise im Bereich von 400 bis 450 ppm, insbesondere bevorzugt 420 ppm betrieben werden. Dafür ergibt sich ein abweichendes Verhältnis von CO₂- und H₂O-Partialdruck. Für die Anwendung unter atmosphärischen Bedingungen kann eine optimale Gestaltung der Schütthöhen der Adsorptionseinheiten vorteilhaft sein.

Vorzugsweise wird die Trocknung derart durchgeführt, dass das aus der Trocknungseinheit austretende Medium einen Feuchtigkeitsgehalt von 0,0196 % bis 0,007 % (Taupunkt -40 °C), vorzugsweise von 0,007 % bis 0,0022 % (Taupunkt -50 °C), weiter bevorzugt von 0,0022 % bis 0,0006 % (Taupunkt -60 °C) aufweist.

Die CO₂-Einheit kann ebenfalls einen schichtweisen oder einen homogenen Aufbau an Physisorbent/en aufweisen. Vorzugsweise weist die CO₂-Einheit einen homogenen Aufbau an Physisorbent/en auf. Bei dem Physisorbenten kann es sich um Zeolith handeln. Es kann sich bei den Physisorbenten auch um eine Mischung von mindestens zwei unterschiedlichen Zeolithen handeln.

Die CO₂-Einheit umfasst vorzugsweise mindestens zwei Module. Die Module können dabei jeweils identisch oder unterschiedlich aufgebaut sein. In einer bevorzugten Ausführungsform umfasst jedes Modul Zeolith als Physisorbenten, insbesondere sind alle Module identisch aufgebaut.

Die Schütthöhen bzw. die Schichtdicken in der Trocknungseinheit und der CO₂-Einheit können ebenfalls ein bestimmtes Verhältnis aufweisen. Das Verhältnis kann im Bereich von 1,2 bis 2,5, vorzugsweise im Bereich von 1,5 bis 2,0 und weiter bevorzugt im Bereich von 1,7 bis 1,9 sein. Besonders bevorzugt ist das Verhältnis der Schütthöhen bzw. der Schichtdicken der Trocknungseinheit und der CO₂-Einheit 1,8.

Ferner ist Gegenstand der vorliegenden Erfindung ein Verfahren zur Gewinnung von Kohlendioxid, umfassend die Schritte:
- Bereitstellen eines gasförmigen Mediums in einem ersten Luftströmungskanal,
- Vortrocknen des gasförmigen Mediums in einer rotierenden Vortrocknungseinheit,
- Trocknen des vorgetrockneten gasförmigen Mediums in mindestens einer Trocknungseinheit,
- Adsorbieren von CO₂ aus dem getrockneten gasförmigen Medium in einer CO₂-Einheit und gleichzeitig Gewinnen von CO₂ durch Desorbieren von CO₂ in einer CO₂-Einheit, wobei die
rotierende Vortrocknungseinheit axial rotiert und der erste Luftströmungskanal die rotierende Vortrocknungseinheit radial ansteuert.

Vorzugsweise wird ein erfindungsgemäßes Verfahren in einer erfindungsgemäßen Vorrichtung durchgeführt. Dabei sollen die Merkmale der Vorrichtung entsprechend auch für das Verfahren angewendet werden können.

Zur Durchführung eines erfindungsgemäßen Verfahrens kann eine Vorrichtung verwendet werden. Alternativ können mindestens zwei Vorrichtungen verwendet werden. Die Vorrichtungen können parallel angeordnet sein.

Wie bereits oben erwähnt, kann es sich bei dem gasförmigen Medium um Atmosphäre, Umgebungsluft, Abgase, z. B. aus Industrieanlagen, Gasmischungen, Punktquellen, etc. handeln. Das gasförmige Medium weist unter anderem Kohlendioxid auf. Vorzugsweise handelt es sich bei dem gasförmigen Medium um Umgebungsluft, die hierin auch als Luft bezeichnet wird.

Ein Schritt des erfindungsgemäßen Verfahrens ist das Vortrocknen des gasförmigen Mediums, das in einem ersten Luftströmungskanal bereitgestellt wird, in einer rotierenden Vortrocknungseinheit. Die axial rotierende Vortrocknungseinheit wird dabei radial von dem gasförmigen Medium angeströmt.

Das Vortrocknen erfolgt vorzugsweise auf einen Feuchtigkeitsgehalt des gasförmigen Mediums auf 0,5 Masse-%, weiter bevorzugt auf 0,25 Masse-%, noch weiter bevorzugt auf 0,1 Masse-%.

Bei der rotierenden Vortrocknungseinheit kann es sich um ein Sorptionsrad bzw. einen Sorptionswärmetauscher handeln. Ein Sorptionsrad ist ein radförmiges Bauteil, das an der Außenseite mit einem Sorptionsmittel beschichtet ist. Das Sorptionsrad bzw. der Sorptionswärmetauscher kann rotieren und von einem Medium angeströmt werden, aus dem mittels des Sorptionsmittels ein bestimmter Stoff sorbiert werden kann.

In einer Ausführungsform umfasst die rotierende Vortrocknungseinheit mindestens ein Sorptionsmittel zur Adsorption von Wasser. Bei dem Sorptionsmittel kann es sich um die hierin genannten Sorptionsmittel handeln. Es kann ein Sorptionsmittel, oder eine Kombination von mindestens zwei Sorptionsmitteln vorliegen.

In einer Ausführungsform handelt es sich bei dem mindestens einen Sorptionsmittel um eine Kombination aus zwei Sorptionsmitteln. Bei den zwei Sorptionsmitteln kann es sich um eine erste Schicht aus Silicagel und eine zweite Schicht aus Zeolith handeln.

Ein erfindungsgemäßes Verfahren umfasst weiter den Schritt des Trocknens des vorgetrockneten gasförmigen Mediums in einer Trocknungseinheit. Die Trocknungseinheit kann, wie hierin für die Vorrichtung beschrieben, mehrere Module umfassen.

Die Module der Trocknungseinheit können sich in verschiedenen Betriebszuständen befinden, wobei in mindestens einem Modul der Trocknungseinheit H₂O adsorbiert wird, in mindestens einem Modul der Trocknungseinheit H₂O desorbiert wird, und in mindestens zwei Modulen der Trocknungseinheit Wärme verschoben wird.

Bei der Anzahl der Module in der Trocknungseinheit in den einzelnen Betriebszuständen kann es sich um ein Vielfaches der genannten Anzahl der einzelnen Module handeln.

Die Trocknungseinheit kann auch mehr als vier Module aufweisen. Die Module können sich wiederum in den Betriebszuständen der Adsorption von H₂O, der Desorption von H₂O und der Wärmeverschiebung befinden. Dabei kann sich das Verhältnis der einzelnen Betriebszustände wie folgt auf die einzelnen Module verteilen: Anzahl der Trocknungsmodule = x Desorptionsmodule + y Adsorptionsmodule + z Wärmeverschiebungsmodule, wobei z=2, oder ein ganzzahliges Vielfaches von 2.

Das Trocknen kann durch mindestens ein geeignetes Material erfolgen, mittels dem bzw. denen der Feuchtigkeitsgehalt eingestellt werden kann. Das Material kann als homogenes Material vorliegen. Alternativ kann das Material auch schichtweise vorliegen. Insbesondere beim schichtweisen Vorliegen kann ein Trocknungsgradient vorliegen. Es kann also eine erste Schicht zu einer ersten Trocknung bis zu einem bestimmten Feuchtigkeitsgehalt führen. In der weiteren Schicht kann eine weitere Trocknung bis zu einem bestimmten Feuchtigkeitsgehalt stattfinden. Es können beliebig viele Schichten vorliegen. Idealerweise sind die Schichten aufeinander abgestimmt. Bei der bzw. den Schichten kann es sich um mindestens einen Physisorbenten, wie hierin beschrieben, handeln.

Während des Trocknens kann vorzugsweise 99,0 %, weiter bevorzugt 99,7 %, noch weiter bevorzugt 99,9 % der im gasförmigen Medium vorhandenen Menge H₂O adsorbiert werden.

Vorzugsweise wird das gasförmige Medium vor dem Trocknen konditioniert. Das Konditionieren wird insbesondere dazu verwendet das gasförmige Medium mit adäquater Temperatur und/oder adäquatem Druck dem Verfahren zuzuführen.

In einer Ausführungsform umfasst ein erfindungsgemäßes Verfahren ein Kühlen des gasförmigen Mediums vor dem Adsorbieren des CO₂. Das Kühlen des gasförmigen Mediums kann durch einen Zwischenkühler erfolgen. Alternativ sind auch andere Bauteile zum Temperieren des gasförmigen Mediums denkbar. Beispielsweise kann es sich um einen Luft-Wasser-Wärmetauscher, einen Luft-Luft-Wärmetauscher und/oder einen Luft-Luft-Luft-Wärmetauscher handeln.

Das eintretende gasförmige Medium wird vorzugsweise auf eine definierte Temperatur heruntergekühlt. Die Temperatur ist vorzugsweise <15°C, weiter bevorzugt <10°C, noch weiter bevorzugt <6°C. Bevorzugt wird das eintretende gasförmige Medium auf eine Temperatur von 5°C gekühlt.

Ein erfindungsgemäßes Verfahren kann den Schritt der Wärmerückgewinnung, wie oben beschrieben umfassen.

Der Energiebedarf eines erfindungsgemäßen Verfahrens kann durch den Einsatz von mindestens einer Wärmepumpe, wie oben beschrieben, gesenkt werden.

In einer Ausführungsform umfasst ein erfindungsgemäßes Verfahren den Schritt des Transportierens des gasförmigen Mediums mittels Gebläse. Das Gebläse kann dem Gebläse einer erfindungsgemäßen Vorrichtung entsprechen.

Das Gebläse kann dazu dienen, das gasförmige Medium durch die Vorrichtung zu führen. Das Gebläse kann an der Eingangsseite und/oder der Ausgangsseite der Vorrichtung angeordnet sein. Ist das Gebläse an der Eingangsseite angeordnet, wird das gasförmige Medium in die Vorrichtung (beispielsweise in die Vorkonditioniereinheit) gedrückt. Ist das Gebläse an der Ausgangsseite der Vorrichtung angeordnet, so wird durch den Sog, der durch das Gebläse entsteht, das gasförmige Medium durch die Vorrichtung gesogen.

In einem erfindungsgemäßen Verfahren erfolgt das Desorbieren des adsorbierten CO₂ vorzugsweise durch Erwärmen und unter Vakuum. Dabei wird die Einheit, in der das CO₂ adsorbiert ist, auf eine definierte Temperatur erhitzt. Durch das Erhitzen wird das CO₂ aus der Einheit gelöst und kann vorzugsweise mit hoher Reinheit abgeführt werden.

In einem erfindungsgemäßen Verfahren wird vorzugsweise zeitgleich in mindestens einem Modul in der Trocknungseinheit das H₂O adsorbiert, während in mindestens einem anderen Modul der Trocknungseinheit das H₂O desorbiert wird. Wenn in mindestens einem Modul einer CO₂-Einheit das CO₂ desorbiert wird, wird vorzugsweise zeitgleich das CO₂ in mindestens einem anderen Modul der CO₂-Einheit adsorbiert.

Das CO₂ kann vorzugsweise in einer Reinheit von >80%, weiter bevorzugt in einer Reinheit von >90%, noch weiter bevorzugt in einer Reinheit von >95% aus der Vorrichtung bzw. dem Verfahren abgeführt werden. In manchen Ausführungsformen wird das CO₂ in einer Reinheit von >99% abgeführt.

Das Desorbieren des adsorbierten CO₂ kann durch Erwärmen auf eine Temperatur von >50°C, insbesondere >80°C, bevorzugt >100°C, weiter bevorzugt >120°C, noch weiter bevorzugt >140°C, erfolgen. Vorzugsweise ist in einem erfindungsgemäßen Verfahren kein Dampf für die Desorption des CO₂ erforderlich. Vorzugsweise erfolgt die Desorption des CO₂ unter Vakuum bei einem Druck von 10 mbar absolut.

Ein erfindungsgemäßes Verfahren kann ferner den Schritt des Kühlens des gasförmigen Mediums vor dem Adsorbieren des CO2 umfassen. Das Kühlen kann mittels eines Zwischenkühlers, wie hierin beschrieben, erfolgen.

Ein erfindungsgemäßes Verfahren und eine erfindungsgemäße Vorrichtung können in einem Direct Air Capture Verfahren verwendet werden.

Ferner ist Gegenstand der vorliegenden Erfindung die Verwendung einer erfindungsgemäßen Vorrichtung oder eines erfindungsgemäßen Verfahrens zur Gewinnung von Kohlendioxid aus einem gasförmigen Medium.

Das gewonnene Kohlendioxid kann als Ausgangsstoff für weitere Verbindungen verwendet werden. Beispielsweise kann das Kohlendioxid als Ausgangsstoff für die Herstellung von Kunststoffen, e-Fuels, etc. verwendet werden.

Ausführungsbeispiele der Erfindung werden nun beispielhaft und unter Bezugnahme auf die beigefügte Zeichnung beschrieben, in der:
Fig. 1 schematisch ein Ausführungsbeispiel einer rotierbaren Vortrocknungseinheit,
Fig. 2 schematisch ein Ausführungsbeispiel einer Beschichtung einer rotierbaren Vortrocknungseinheit,
Fig. 3 schematisch ein Ausführungsbeispiel einer Vorrichtung zur Gewinnung von Kohlendioxid,
Fig. 4 schematisch ein weiteres Ausführungsbeispiel einer Vorrichtung zur Gewinnung von Kohlendioxid, und
Fig. 5 schematisch ein Ausführungsbeispiel eines Verfahrens zur Gewinnung von Kohlendioxid, zeigen.

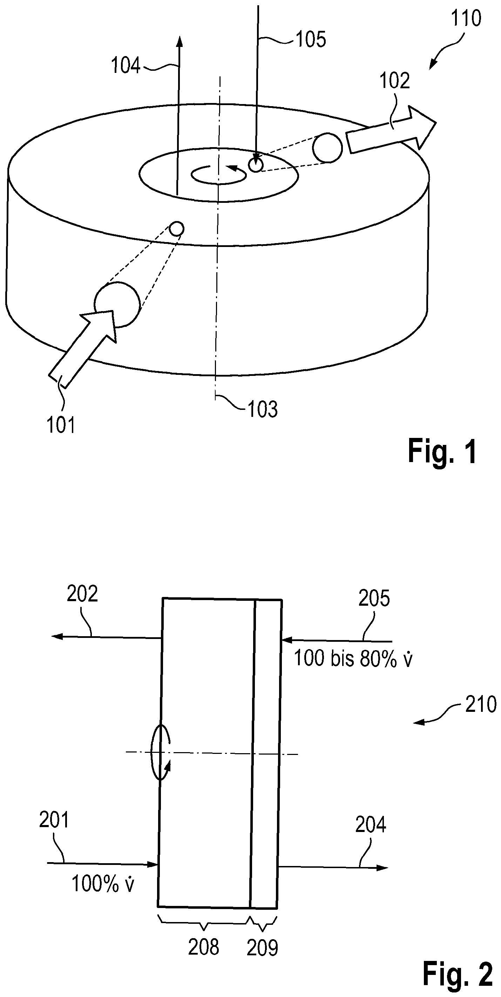

Figur 1 zeigt schematisch ein Ausführungsbeispiel einer rotierbaren Vortrocknungseinheit 110. 101 stellt den Lufteintritt von Prozessluft auf der Trocknungsseite dar. Die trockene Regenerationsluft 105 tritt auf der Regenerationsseite der rotierbaren Vortrocknungseinheit 110 aus. Die rotierbare Vortrocknungseinheit 110 kann um die Achse 103 rotieren. Die Rotationsachse der rotierbaren Vortrocknungseinheit verläuft somit axial. Die Durchströmungsrichtung der Prozess- und Regenerationsluft 101 und 105 verläuft radial. Im äußeren radialen Bereich auf der Trocknungsseite liegt ein höherer Wasserpartialdruck vor und damit funktioniert bei niedrigerer Strömungsgeschwindigkeit die Adsorption des Wassers gut. Bei kleiner werdendem Radius sinkt der Wasserpartialdruck durch die fortschreitende Wasseradsorption. Gleichzeitig wird die Strömungsgeschwindigkeit erhöht, so dass die Kinetik der Adsorption unterstützt wird und damit auch bei kleineren Wasserpartialdrücken eine gute Trocknungswirkung erzielt wird. 104 stellt die getrocknete Prozessluft dar. 105 stellt trockene Regenerationsluft dar. Die rotierbare Vortrocknungseinheit 110 kann auf der angeströmten Außenfläche mindestens eine Beschichtung von mindestens einem Sorptionsmittel für Wasser aufweisen. 102 stellt die feuchte Abluft dar.

Alternativ kann bei dieser Anordnung der radialen Luftführung ein bestimmtes Beschichtungsmuster an Sorptionsmitteln anwendbar sein. Im äußeren radialen Bereich ist ein Sorptionsmittel zur groben Trocknung vorteilhaft (z.B. Silicagel), im inneren radialen Bereich ist ein Sorptionsmittel zur feinen Trocknung vorteilhaft (z.B. Zeolith).

Bei der rotierbaren Vortrocknungseinheit, wie sie in Figur 1 dargestellt ist, kann es sich um ein Sorptionsrad, oder einen Sorptionswärmetauscher handeln.

Figur 2 zeigt schematisch ein Ausführungsbeispiel einer Beschichtung an der Umfangsaußenseite einer rotierbaren Vortrocknungseinheit 210. Der Lufteintritt der Prozessluft ist als 201 dargestellt. Die Luft wird durch die rotierbare Vortrocknungseinheit 210 geführt und tritt als trockene Prozessluft 204 wieder aus. Trockene Regenrationsluft 205 tritt in die rotierbare Vortrocknungseinheit 210 ein und als feuchte Abluft 202 wieder aus. Die rotierbare Vortrocknungseinheit 210 rotiert um die eingezeichnete Achse. 208 stellt die Beschichtung mit einem ersten Sorptionsmittel, welches besonders für eine grobe Vortrocknung des gasförmigen Mediums (z. B. Luft) bei höheren Partialdrücken geeignet ist (z. B. Silicagel) dar. 209 stellt die Beschichtung mit einem zweiten Sorptionsmittel dar, welches besonders für eine feine Trocknung des gasförmigen Mediums (z. B. Luft) bei geringeren Partialdrücken geeignet ist (z. B. Zeolith). "ṽ" steht für den Volumenstrom. Damit ist gemeint, dass von den 100 % des eingesetzten Volumenstroms 80 bis max. 100 % für die Regeneration der Vortrocknungseinheit verwendet werden. Der restliche Anteil wird für die Desorptionsschritte der Trocknungs- und CO₂-Einheit benötigt.

Ein solches Beschichtungsmuster kann vorteilhaft sein, da es die trockene Prozessluft auf einen noch niedrigeren Taupunkt trocknen kann im Vergleich zu einer rotierbaren Vortrocknungseinheit (z. B. einem Sorptionswärmetauscher) mit nur einer Art von Beschichtung. Die Aufteilung zwischen der ersten und der zweiten Beschichtung erfolgt vorzugsweise im Verhältnis 70 / 30 bis 90 / 10 %.

Bei der rotierbaren Vortrocknungseinheit, wie sie in Figur 2 dargestellt ist, kann es sich um ein Sorptionsrad, oder einen Sorptionswärmetauscher handeln.

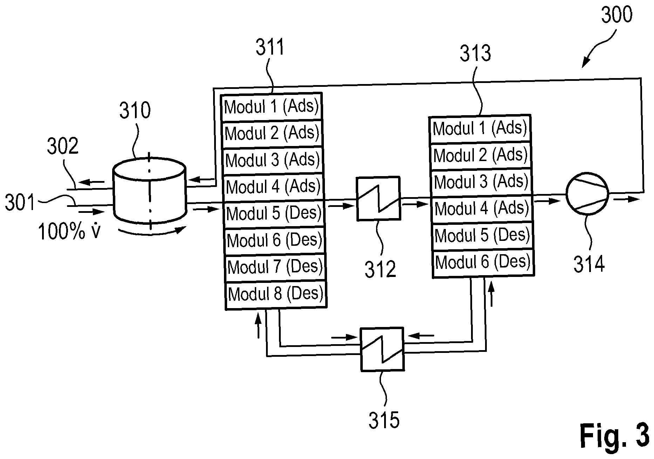

Figur 3 zeigt schematisch ein Ausführungsbeispiel einer Vorrichtung zur Gewinnung von Kohlendioxid 300. Die Vortrocknung erfolgt mittels rotierbarer Vortrocknungseinheit 310 (z. B. ein Sorptionswärmetauscher). Dabei tritt gasförmiges Medium (z. B. Luft) 301 radial in die rotierbare Vortrocknungseinheit 310 ein und tritt vorgetrocknet in die Trocknungseinheit 311 zur Feintrocknung ein. Die Trocknungseinheit 311 umfasst acht Module. Vier Module der Trocknungseinheit 311 befinden sich im Modus der Adsorption (Ads) während vier weitere Module sich im Modus der Desorption (Des) befinden. Ein Teil des feingetrockneten gasförmigen Mediums tritt in einen Zwischenkühler 312 ein. Das gasförmige Medium, das aus dem Zwischenkühler 312 austritt, wird in die CO₂-Einheit 313 geführt. Die CO₂-Einheit 313 umfasst sechs Module, wobei vier Module sich in einem Adsorptionsmodus (Ads) befinden und zwei Module im Desorptionsmodus (Des). Ein Teil des Mediums, das aus der CO₂-Einheit 313 austritt wird mittels Gebläse 314 zur rotierbaren Vortrocknungseinheit 310 rückgeführt. Das rückgeführte Medium kann dazu verwendet werden, um die rotierbare Vortrocknungseinheit 310, insbesondere das Sorptionsmittel der rotierbaren Vortrocknungseinheit 310, zu trocknen. Das austretende Medium tritt als feuchte Abluft 302 aus der rotierbaren Vortrocknungseinheit 310 aus. Ein anderer Teil des gasförmigen Mediums, der aus der Trocknungseinheit 311 austritt wird in Wärmetauschereinheiten zur Wärmerückgewinnung 315 geführt. Die Wärme wird abgegeben und kann dafür verwendet werden das CO₂ aus den Modulen der CO₂-Einheit 313 zu desorbieren. Ein Teil des gasförmigen Mediums kann aus der CO₂-Einheit 313 austreten und in die Wärmetauschereinheiten zur Wärmerückgewinnung 315 eintreten. Die Wärme kann dazu verwendet werden Wasser aus den entsprechenden Modulen der Trocknungseinheit 311 zu desorbieren.

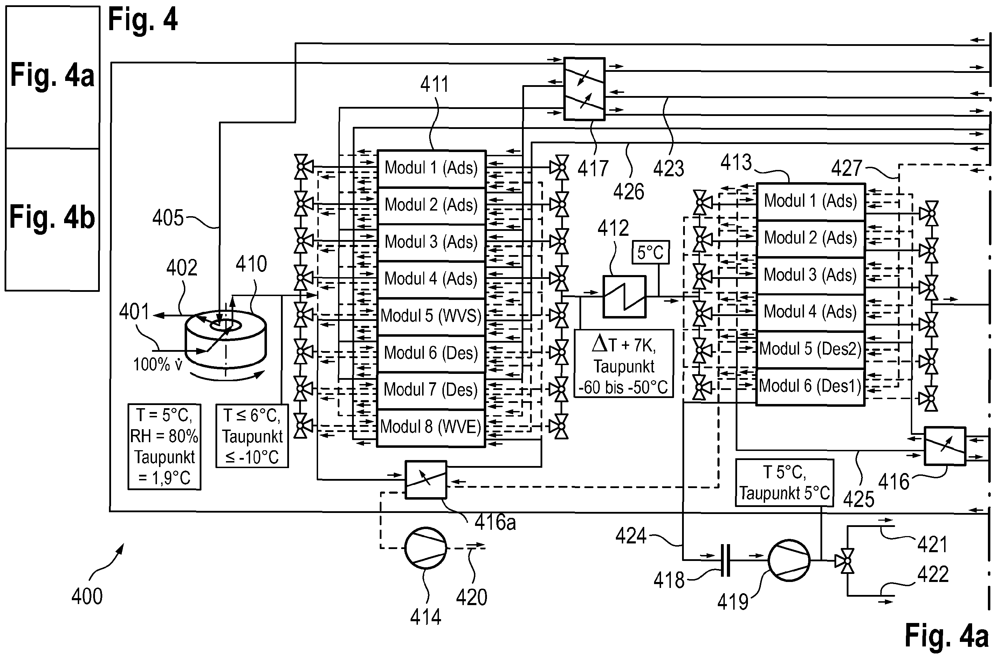

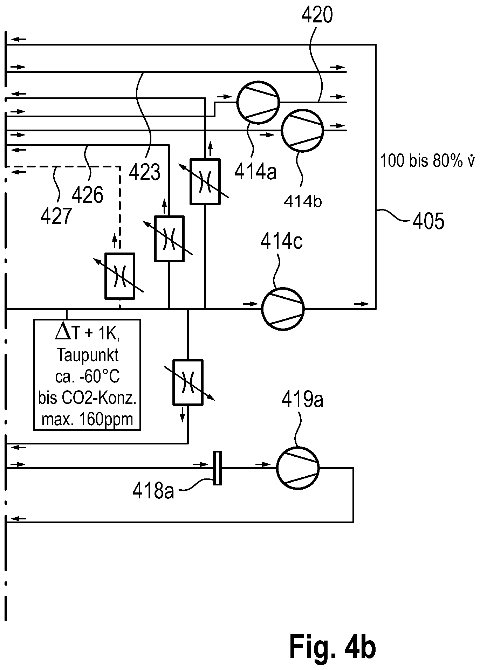

Figur 4 zeigt schematisch ein weiteres Ausführungsbeispiel einer Vorrichtung zur Gewinnung von Kohlendioxid 400. Bei der Gewinnung von Kohlendioxid kann es sich um ein Direct Air Capture Verfahren (DAC-Verfahren) handeln. Die Vorrichtung basierend auf Physisorbenten umfasst im Wesentlichen eine rotierbare Vortrocknungseinheit 410 bestehend aus einem (oder mehreren parallel angeordneten) Sorptionswärmetauschern, eine Trocknungseinheit 411 zur Feintrocknung des gasförmigen Mediums, wie Luft, einen Zwischenkühler 412, eine CO₂-Adsorptionseinheit 413, mehrere Wärmetauschereinheiten 416 und 417 zur Wärmerückgewinnung und ein saugend angeordnetes Gebläse 414a, b, c. Die trockene Regenerationsluft 405 kann zur Vortrocknung der rotierenden Vortrocknungseinheit 410 verwendet werden.

In dem System sind eine bestimmte Anzahl an Trocknungsmodulen in der Trocknungseinheit 411 und CO₂-Modulen in der CO₂-Einheit 413 vorhanden, welche unabhängig voneinander in den Hauptbetriebsphasen "Adsorption" (Ads) und "Desorption" (Des) betrieben werden. Damit können die Trocknungseinheit 411 und die CO₂-Einheit 413 individuell optimiert betrieben werden. Dieses System wird als "entkoppeltes System" bezeichnet. Der Luftmassenstrom durch das System ist konstant, so dass genau so viele Trocknungsmodule in der Adsorptionsphase betrieben werden, wie für die CO₂-Adsorption in den CO₂-Modulen erforderlich sind, um die erforderliche Taupunkt-Temperaturbedingung am Eintritt der CO₂-Einheit 413 darzustellen.

Das vorgeschlagene System besteht aus 8 Trocknungsmodulen und 6 CO₂-Modulen. Dabei befinden sich stets jeweils 4 Module der Trocknungseinheit 411 und CO₂-Einheit 413 in der Adsorptionsphase (Lufttrocknung und CO₂-Aufnahme). Die Anzahl der Module ergibt sich aus den erforderlichen Prozesszeiten der Trocknungs- und CO₂-Einheit (Trocknungseinheit Adsorptions- zu Desorptionsdauer 1:1; CO₂-Einheit Adsorptions- zu Desorptionsdauer 1:0.5). Die Gesamtprozessdauer eines Trocknungsmoduls beträgt beispielsweise 4 h (2 h Adsorption, 2 h Desorption), die Gesamtprozessdauer eines CO₂-Moduls beträgt beispielsweise 4,5 h (3 h Adsorption, 1,5 h Desorption).

Es kann aber auch eine andere Anzahl an Trocknungs- und CO₂-Modulen in dem System angeordnet sein, solange der Gesamtmassenstrom des Adsorptionspfades durch das System konstant ist und die Desorption der Trocknungs- und CO₂-Module abgeschlossen ist, bevor die Adsorptionsphasen der Trocknungs- und CO₂-Module abgebrochen werden müssen.

Das gasförmige Medium (z. B. die feuchte Umgebungsluft) 401 wird durch die rotierbare Vortrocknungseinheit 410 (z. B. den Sorptionswärmetauscher) auf der Zuluftseite geleitet. Das in dem gasförmigen Medium (z. B. in der Luft) enthaltene Wasser wird an dem Sorptionsmaterial (vorzugsweise Silicagel oder Zeolith, oder eine Kombination aus mehreren Sorptionsmaterialien) adsorbiert und verlässt bei einer Umgebungsluftfeuchtigkeit von 80 % rel. Feuchte und 5 °C die rotierbare Vortrocknungseinheit 410 mit einer Temperatur von 6 °C und einem Taupunkt von -10 °C.

Für die Adsorption von CO₂, z. B. an Zeolithen, ist der Wassergehalt in dem gasförmigen Medium, z. B. Prozessluft, bei einem Taupunkt von -10 °C zu hoch, da ein Zeolith vorzugsweise Wasser anstelle CO₂ adsorbiert. Aus diesem Grund wird das gasförmige Medium, z. B. die Prozessluft, zu einer Trocknungseinheit 411 zur Feintrocknung des gasförmigen Mediums, z. B. Luft, auf einen Taupunkt von mindestens -50 °C, vorzugsweise -60 °C geführt.

In der Trocknungseinheit 411 wird das Wasser aus dem angesaugten und vorgetrockneten gasförmigen Medium mittels Adsorption z. B. an einem Zeolith (vorzugsweise ein 13X-Typ Zeolith) abgetrennt. Die Gesamtschütthöhe in der Trocknungseinheit 411 beträgt beispielsweise 135 mm (wie bei den CO₂-Modulen in der CO₂-Einheit 413).

Die Anströmfläche der Trocknungseinheit 411 ist so gestaltet, dass sich vorzugsweise eine mittlere Anströmgeschwindigkeit von 0,2 m/s vor dem Sorptionsmaterial ergibt, wenn bei konstantem Adsorptionsvolumenstrom durch das System die mittlere Anströmgeschwindigkeit vor dem Sorptionsmaterial der CO₂-Einheit 413 vorzugsweise 0,2 m/s beträgt. Die mittlere Anströmgeschwindigkeit kann auch im Bereich von 0,1 bis 0,4 m/s liegen. Es besteht ein Verhältnis der Anströmflächen zwischen Trocknungseinheit 411 und CO₂-Einheit 413 von 1:1 (0,75 bis 1,0 auch möglich). Die Adsorptionsphase eines Trocknungsmoduls wird vorzugsweise längstens bis zu einem Wasserdurchbruch entsprechend einer Taupunkt-Temperaturbedingung von -50 °C betrieben. Bei der Adsorption wird Adsorptionswärme freigesetzt (exothermer Vorgang). Dadurch verlässt das trockene gasförmige Medium, z. B. die trockene Luft, die Trocknungseinheit mit einer um ca. 7 K höheren Temperatur gegenüber der Eintrittstemperatur. Bei höheren oder niedrigeren Feuchtegehalten des eintretenden gasförmigen Mediums kann die Prozesszeit der Trocknungseinheit 411 angepasst werden, so dass die Taupunkt-Temperaturbedingung von -50 °C als Wasserdurchbruch am Austritt eingehalten werden kann.

Um in der nachfolgenden CO₂-Einheit 413 eine möglichst gute Adsorptionskapazität darzustellen, wird das getrocknete gasförmige Medium über einen Zwischenkühler 412 geleitet und auf 5 °C zurückgekühlt.

Das trockene und zurückgekühlte gasförmige Medium wird anschließend durch eine CO₂-Einheit 413 geleitet, in welcher mittels Adsorption z. B. an einem Zeolith (vorzugsweise an einem 13X-Typ Zeolith) das CO₂ aus dem gasförmigen Medium abgetrennt wird. Dabei gestaltet sich die CO₂-Stufe idealerweise in der Art, dass diese eine Schütthöhe von vorzugsweise 135 mm aufweist. Damit ist ein gewisser Gleichteilumfang in Trocknungseinheit 411 und CO₂-Einheit 413 gegeben. Es ist auch eine Schütthöhe von 67 bis 270 mm bzw. 50 % bis 200 % möglich für die Direct Air Capture-Anwendung.

Der CO₂-Adsorptionsvorgang wird bis zu einem CO₂-Durchbruch von vorzugsweise 140 bis 160 ppm durchgeführt, um eine möglichst effiziente Ausnutzung des vorgetrockneten gasförmigen Mediums zu gewährleisten (wird bei dem vorgeschlagenen System nach 3 h erreicht). Ein Betrieb der CO₂-Adsorption ist bis zu einem CO₂-Durchbruch von 360 ppm noch sinnvoll möglich (bei einer Konzentration von 420 ppm in der Umgebungsluft), um den CO₂-Ertrag pro Adsorptionsphase zu erhöhen, unter Inkaufnahme eines energetischen Nachteils, da unverhältnismäßig mehr Aufwand in die Lufttrocknung investiert wird, als CO₂ aus der Adsorptionsphase abgetrennt werden kann.

Das trockene gasförmige Medium wird nach der CO₂-Einheit 413 für die H₂O-Desorption (Regeneration) der rotierbaren Vortrocknungseinheit 410 (z. B. des Sorptionswärmetauschers) und der Trocknungsstufe in der Trocknungseinheit 411 verwendet.

Ca. 80 % des trockenen gasförmigen Mediums aus der CO₂-Einheit 413 wird für die Regeneration der rotierbaren Vortrocknungseinheit 410, z. B. des Sorptionswärmetauschers, eingesetzt. Dieses gasförmige Medium wird auf die Regenerationsseite der rotierbaren Vortrocknungseinheit 410, z. B. des Sorptionswärmetauschers, geleitet. Durch den Partialdruckunterschied nimmt die sehr trockene Regenerationsluft die in der rotierbaren Vortrocknungseinheit 410 gespeicherte Feuchtigkeit auf und verlässt die Vorrichtung als feuchte Abluft 402. Das Sorptionsmaterial der rotierbaren Vortrocknungseinheit 410 wird bis auf einen niedrigen Beladungszustand regeneriert.

Der restliche Teil des trockenen gasförmigen Mediums aus der CO₂-Einheit 413 wird für die zyklische Desorption der Trocknungsstufe und CO₂-Stufe verwendet.

Weiterhin wird die in der Desorptionsphase der Trocknungsmodule in der Trocknungseinheit 411 aufgebrachte Wärmeenergie über zwei Wege zurückgewonnen.

In der ersten Phase der H₂O-Desorption wird die im Sorptionsmaterial gespeicherte Wärme mittels trockenem gasförmigen Medium von einem Trocknungsmodul, welches gerade die Desorption beendet hat, auf ein Trocknungsmodul verschoben, welches als nächstes in die Desorption geht. Dafür wird vorzugsweise ein Massenstrom in Höhe von 7,5 % des Adsorptionsmassenstroms (auch 0,5 bis 15 % möglich) eingesetzt, so dass ein Großteil der Restwärme innerhalb von 30 Minuten verschoben wird. Die Durchströmung erfolgt dabei entgegengesetzt der Strömungsrichtung der Adsorptionsphase.

Für die weitere Desorptionsphase wird zum Spülen (Verringerung des Partialdrucks) ein Massenstrom in Höhe von vorzugsweise 1,25 % des Adsorptionsmassenstroms (auch 0,1 bis 5 % möglich) eingesetzt. Über den innenliegenden Wärmetauscher wird das Sorptionsmaterial und das einströmende gasförmige Medium zum Spülen auf vorzugsweise 150 °C erhitzt (Temperaturen im Bereich von 100 bis 200 °C sind auch möglich). Um den Energiebedarf für das Aufheizen zu reduzieren, wird das in der Trocknungseinheit 411 eintretende gasförmige Medium über einen Luft-Luft-Wärmetauscher 417 geleitet und mit der aus der Trocknungseinheit 411 austretenden heißen Desorptionsluft vorgewärmt. Das für die H₂O-Desorption eingesetzte gasförmige Medium wird entgegengesetzt zur Strömungsrichtung der Adsorption eingeleitet. Der Desorptionsvorgang ist nach einer Dauer von einer Stunde unter den genannten Bedingungen abgeschlossen.

Es schließt sich der dritte Teil der H₂O-Desorption mit der Wärmeverschiebung (WVS) aus dem gerade desorbierten, noch heißen Modul zu einem nächsten, am Beginn der Desorption stehenden Modul mit einem eingesetzten Verschiebemassenstrom von 7,5 % des Adsorptionsmassenstroms (auch 0,5 bis 15 % möglich) an. Diese Wärmeverschubphase dauert wiederum 30 Minuten. Damit kühlt sich das Sorptionsmaterial des gerade desorbierten Moduls ab, so dass dieses zu Beginn der sich anschließenden Adsorption unmittelbar aufnahmefähig ist.

In diesem Modus ist ein quasi-kontinuierlicher Betrieb von 4 Trocknungsmodulen in der Adsorption und 4 Trocknungsmodulen in der Desorption möglich, welche jeweils 2 Stunden in der Adsorption und 2 Stunden in der Desorption betrieben werden.

Das gasförmige Medium aus der Trocknungseinheit 411 kann über einen Luft-Luft-Wärmetauscher 417 mittels Gebläse 414a als Abluft 420 abgeführt werden.

Bei der Desorption der CO₂-Module wird das Modul in der ersten Desorptionsphase auf einen Absolutdruck von 10 mbar absolut evakuiert. Anschließend wird mittels des innenliegenden Wärmetauschers das Sorptionsmaterial auf 150 °C erhitzt (120 bis 200 °C sind auch möglich). Dabei wird das CO₂ desorbiert und kontinuierlich durch die Vakuumpumpe 419 abgesaugt. Bei ausreichender Reinheit (> 95 %, vorzugsweise > 99 %) wird das desorbierte CO₂ in den Produktpfad 422 geleitet. Diese erste Desorptionsphase dauert 30 Minuten.

Da während der Adsorptionsphase nicht verhindert werden kann, dass eine sehr geringe Restfeuchte in die CO₂-Stufe eindringen kann (durch einen geringen Wasserdurchbruch nach der Trocknungseinheit 411), schließt sich nach der CO₂-Desorption eine H₂O-Desorption in der CO₂-Stufe bei Unterdruck an, um die Restbeladung von H₂O zu entfernen. Dafür wird unter Anhebung der Desorptionstemperatur auf vorzugsweise 200 °C (auch 150 bis 200 °C möglich) ein trockenes gasförmiges Medium von 3,4 % Massenstromanteil des Adsorptionsmassenstroms (auch 0,1 bis 5 % möglich) eingeleitet, welche kontinuierlich durch die Vakuumpumpe 419 abgesaugt wird, wobei ein Druck von vorzugsweise 100 mbar absolut (auch 10 bis 800 mbar möglich) gehalten wird ("2-stufige Desorption"). Das für die Desorption eingeleitete trockene gasförmige Medium wird über einen Luft-Luft-Wärmetauscher 416 geleitet und mit der aus dieser Desorptionsphase 425 austretenden heißen Desorptionsluft vorgewärmt. Somit wird ein Teil der Desorptionsenergie zurückgewonnen. Vor der Vakuumpumpe 419 wird das desorbierte und gasförmig vorliegende Wasser an einem Kondensator 418 kondensiert (Austrittstemperatur 5 °C), sodass die Verdichterarbeit der Vakuumpumpe 419 reduziert wird. Die Desorptionsluft verlässt die Vakuumpumpe 419 auf Grund der Verdichtung mit einer Temperatur von größer als 150 °C. Die heiße Desorptionsluft wird zur Trocknungseinheit 411 geleitet und dort mittels eines Luft-Luft-Wärmetauschers 417 zur Vorwärmung der Spülluft der Desorptionsphase verwendet. Die zweite Desorptionsphase dauert vorzugsweise 35 Minuten.

Um die im Sorptionsmaterial gespeicherte Wärme zurückzugewinnen, schließt sich eine Wärmeverschubphase 427 an, bei welcher unter Atmosphärendruck mit einem Massenstromanteil von 7,5 % des Adsorptionsmassenstromes (auch 0,5 bis 15 % möglich) trockenes gasförmiges Medium durch das Modul geleitet wird. Dadurch kühlt sich das Sorptionsmaterial ab und ist in der anschließenden Adsorptionsphase unmittelbar aufnahmefähig. Die heiße Abluft aus der Wärmeverschubphase 427 wird zur Trocknungseinheit 411 geleitet, um dort über einen Luft-Luft-Wärmetauscher 416a die Luft der Wärmeverschubphase zwischen den Trocknungsmodulen zusätzlich zu erhitzen. Die Wärmeverschubphase 427 der CO₂-Module in der CO₂-Einheit 413 dauert 25 Minuten.

Dadurch ist ein quasi-kontinuierlicher Betrieb von 4 CO₂-Modulen in der Adsorption und 2 CO₂-Modulen in der Desorption möglich, welche jeweils 3 Stunden in der Adsorption und 1,5 Stunden in der Desorption betrieben werden. Die Module der CO₂-Einheit 413 können mit einem zeitlichen Versatz von jeweils 45 Minuten oder mit einem Versatz von 60-30-60-30-60-30 Minuten betrieben werden. Trocknungseinheit 411 und CO₂-Einheit 413 können beliebig zueinander versetzt betrieben werden.

Aus der CO₂-Einheit 413 kann über einen Desorptionspfad 424 ein Teil des gasförmigen Mediums über einen Kondensator 418 mittels einer Vakuumpumpe 419 geführt werden und in Restluft 421 und CO₂-Produkstrom 422 mit einer Reinheit >99% geteilt werden.

Zur Feinsttrocknung der CO₂-Einheit kann über einen Desorptionspfad 425 über einen Luft-Luft-Wärmetauscher 416, einem Kondensator 418a, einer Vakuumpumpe 419a, einem Luft-Luft-Luft-Wärmetauscher 417 das im Sorbentmaterial gespeicherte H₂O als feuchte Abluft 420 abgeführt werden.

Nach der CO₂-Einheit 413 ist ein Gebläse 414c angebracht, welches das gasförmige Medium durch das System saugt. Für einen guten Kompromiss zwischen Druckverlust über die Adsorptionseinheiten und CO₂-Ertrag ist eine mittlere Anströmgeschwindigkeit der Stirnflächen der CO₂-Adsorbereinheiten von 0,2 m/s günstig (0,1 bis 0,4 m/s auch möglich).

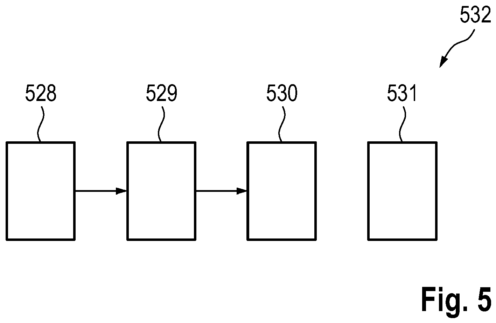

Figur 5 stellt schematisch eine Ausführungsform eines erfindungsgemäßen Verfahrens zur Gewinnung von CO₂ 532 dar. Zunächst wird ein gasförmiges Medium in einem ersten Luftströmungskanal bereitgestellt 528. Das gasförmige Medium wird anschließend in einer rotierenden Vortrocknungseinheit vorgetrocknet 529, wobei die rotierende Vortrocknungseinheit axial rotiert und ein erster Luftströmungskanal die rotierende Vortrocknungseinheit radial ansteuert. Weiter wird das vorgetrocknete gasförmige Medium in mindestens einer Trocknungseinheit getrocknet 530. In einem weiteren Schritt 531 wird das CO₂ aus dem mindestens vorgetrockneten gasförmigen Medium in einer CO₂-Einheit adsorbiert und gleichzeitig CO₂ durch Desorbieren von CO₂ in einer CO₂-Einheit gewonnen.

### Bezugszeichenliste

300, 400 Vorrichtung zur Gewinnung von Kohlendioxid
101, 201, 301, 401 Lufteintritt
102, 202, 302, 402 feuchte Abluft
103, 203 Achse
104, 204 getrocknete Prozessluft
105, 205, 405 trockene Regenerationsluft
206 trockene Regenerationsluft
208 Beschichtung
110, 210, 310, 410 rotierbare Vortrocknungseinheit
311, 411 Trocknungseinheit
312, 412 Zwischenkühler
313, 413 CO₂-Einheit
314, 414a, b, c Gebläse
315 Wärmetauschereinheiten zur Wärmerückgewinnung
416, 416a Luft-Luft-Wärmetauscher
417 Luft-Luft-Luft-Wärmetauscher
418, 418a Kondensator
419, 419a Vakuumpumpe
420 feuchte Abluft
421 Restluft
422 CO₂-Produktstrom
423 Pfad Desorption
424 Pfad Desorption 1
425 Pfad Desorption 2
426 Pfad Wärmeverschiebung Trocknungseinheit
427 Pfad Wärmeverschiebung CO₂
528 bereitstellen eines gasförmigen Mediums in einem ersten Luftströmungskanal
529 vortrocknen des gasförmigen Mediums in einer rotierenden Trocknungseinheit
530 trocknen des vorgetrockneten gasförmigen Mediums in einer Trocknungseinheit
531 adsorbieren von CO₂ aus dem mindestens vorgetrockneten gasförmigen Medium und
gleichzeitig Gewinnen von CO₂ durch Desorbieren von CO₂ in einer CO₂-Einheit
532 Verfahren zur Gewinnung von CO₂

## Patentansprüche

1. Vorrichtung zur Gewinnung von Kohlendioxid (300, 400) aus einem gasförmigen Medium umfassend:
einen ersten Luftströmungskanal für das gasförmige Medium,
einen zweiten Luftströmungskanal für Abluft der Vorrichtung,
mindestens eine rotierbare Vortrocknungseinheit (110, 210, 310, 410) umfassend mindestens ein Sorptionsmittel zur Physisorption von Wasser,
wobei die mindestens eine rotierbare Vortrocknungseinheit (110, 210, 310, 410) axial rotierend antreibbar ist und der erste Luftströmungskanal radial die mindestens eine rotierbare Vortrocknungseinheit (110, 210, 310, 410) ansteuert.

2. Vorrichtung (300, 400) nach Anspruch 1 umfassend mindestens eine Trocknungseinheit (311, 411) und mindestens eine CO₂-Einheit (313, 413).

3. Vorrichtung (300, 400) nach Anspruch 2, wobei die CO₂-Einheit (313, 413) mindestens ein Adsorptionsmodul und mindestens ein Desorptionsmodul umfasst.

4. Vorrichtung (300, 400) nach Anspruch 2 oder 3, wobei die Trocknungseinheit (311, 411) mindestens vier Module umfasst und wobei es sich bei den Modulen um mindestens ein Desorptionsmodul, mindestens zwei Wärmeverschiebungsmodule und mindestens ein Adsorptionsmodul handelt.

5. Vorrichtung (300, 400) nach mindestens einem der Ansprüche 1 bis 4, wobei der zweite Luftströmungskanal axial die rotierbare Vortrocknungseinheit (110, 210, 310, 410) ansteuert.

6. Vorrichtung (300, 400) nach mindestens einem der Ansprüche 1 bis 5, wobei die rotierbare Vortrocknungseinheit (110, 210, 310, 410) mindestens zwei Sorptionsmittel zur Physisorption von Wasser umfasst.

7. Vorrichtung (300, 400) nach mindestens einem der Ansprüche 1 bis 6, wobei das mindestens eine Sorptionsmittel zur Physisorption von Wasser Zeolith, Graphit, Alumosilikat, MOF (Metal Organic Framework) oder ein Silicagel umfasst.

8. Verfahren zur Gewinnung von Kohlendioxid (532), umfassend die Schritte:
- Bereitstellen eines gasförmigen Mediums in einem ersten Luftströmungskanal (528),
- Vortrocknen des gasförmigen Mediums in einer rotierenden Vortrocknungseinheit (529),
- Trocknen des vorgetrockneten gasförmigen Mediums in mindestens einer Trocknungseinheit (530),
- Adsorbieren von CO₂ aus dem getrockneten gasförmigen Medium in einer CO₂-Einheit und gleichzeitig Gewinnen von CO₂ durch Desorbieren von CO₂ in einer CO₂-Einheit (531), wobei
die rotierende Vortrocknungseinheit axial rotiert und der erste Luftströmungskanal die rotierende Vortrocknungseinheit radial ansteuert.

9. Verfahren (532) nach Anspruch 8, wobei die rotierende Vortrocknungseinheit (110, 210, 310, 410) mindestens ein Sorptionsmittel zur Adsorption von Wasser umfasst.

10. Verwendung einer Vorrichtung (300, 400) nach mindestens einem der Ansprüche 1 bis 7, oder eines Verfahrens (532) nach Anspruch 8 oder 9 zur Gewinnung von Kohlendioxid aus einem gasförmigen Medium.
